# EUROPEAN PATENT APPLICATION

(11) **EP 3 013 025 A1**
(43) Date of publication of application: **27.04.2016**
(21) Application number: 13887067.0
(22) Date of filing: 17.09.2013
(51) Int. Cl.: H04M 11/06

(54) **MULTIMEDIA DATA TRANSMISSION METHOD, AND APPARATUS**

(30) Priority: 21.06.2013 CN 201310250130
(71) Applicant: ZTE Corporation, Shenzhen, Guangdong 518057 (CN)
(72) Inventor: LIN, Jian, Shenzhen Guangdong 518057 (CN); LIU, Yong, Shenzhen Guangdong 518057 (CN); ZHANG, Jiaming, Shenzhen Guangdong 518057 (CN)
(74) Representative: Brevalex
(86) International application number: PCT/CN2013/083688
(87) International publication number: WO 2014/201775

(57) **Abstract**

The present disclosure discloses a method for transmission of multimedia data, which includes: converting analogue multimedia data received from a terminal to digital multimedia data; separating the digital multimedia data into digital audio data and digital video data, and converting coding format of the digital video data; compressing the digital audio data and the digital video data in converted the coding format respectively, converting protocol format of the compressed digital audio data and of the compressed digital video data respectively, and sending the resulting digital audio data and the resulting digital video data to a network. The present disclosure further discloses a device for transmission of multimedia data. With the technical solutions of the present disclosure, both video data and audio data may be transmitted, and the transmission rate of multimedia data may be increased efficiently.

## Description

### TECHNICAL FIELD

The present disclosure relates to the technology of transmission of multimedia data on Internet, and in particular to a method and device for transmission of multimedia data.

### BACKGROUND

With the development of terminal products, the resolution of terminal screens becomes higher and higher. In most cases, the size of data for a single frame of terminal screens is larger than 3 MBytes. The astronomical amount of data brings difficulty in the acquisition of video information of terminals. At present, methods for acquiring video information of a terminal through a client installed therein are disadvantageous to the deploitation and popularisation of the resource pool of the terminal.

The traditional methods for acquiring video information of a terminal through a client have below disadvantages: only video information can be acquired, and it is impossible to acquire audio information; a client is supported by limited types of terminal equipments and operating systems; the client will additionally occupy resources of CPU and memory of the terminal.

### SUMMARY

On this account, the primary object of the embodiments of the present disclosure is to provide a method and device for transmission of multimedia data, enabling transmission of both video data and audio data, and efficiently increasing the transmission rate of multimedia data.

For this purpose, the technical solutions of the embodiments of the present disclosure are implemented as follows.

A method for transmission of multimedia data, which includes:
analogue multimedia data received from a terminal is converted to digital multimedia data;
the digital multimedia data is separated into digital audio data and digital video data, and coding format of the digital video data is converted;
the digital audio data and the digital video data in converted coding format are compressed respectively, protocol format of the compressed digital audio data and of the compressed digital video data is converted respectively, and the resulting digital audio data and the resulting digital video data are sent to a network.

Preferably, the coding format of the digital video data is Red Green Blue (GRB) format;
accordingly, the step of converting coding format of the digital video data includes: the coding format of the digital video data is converted from RGB format to YUV format.

Preferably, the step of compressing the digital audio data and the converted digital video data in converted coding format respectively includes:
the digital audio data is compressed with a Moving Picture Experts Group Audio Layer III (MP3) compression algorithm;
the digital video data in the converted coding format is compressed with a Joint Photo graphic Experts Group (JPEG) compression algorithm.

Preferably, the step of converting protocol format of the compressed digital audio data and of the compressed digital video data respectively includes:
the compressed digital audio data and the compressed digital video audio are encapsulated according to a transmission protocol of the network into packets corresponding to the transmission protocol of the network.

Preferably, before the step of compressing the digital audio data and the converted digital video data in converted coding format respectively, the method also includes:
the digital audio data and the digital video data in converted the coding format are stored in a dedicated storage; and when the size of the data stored in the storage reaches a preset threshold, the digital audio data and the digital video data in converted coding format are read from the dedicated storage for compression.

A device for transmission of multimedia data, which includes: a conversion module, a separation module, a coding format conversion module, a compression module, a protocol format conversion module and a sending module, in which
the conversion module is configured to convert analogue multimedia data received from a terminal to digital multimedia data;
the separation module is configured to separate the digital multimedia data into digital audio data and digital video data;
the coding format conversion module is configured to convert coding format of the digital video data;
the compression module is configured to compress the digital audio data and the digital video data in converted coding format respectively;
the protocol format conversion module is configured to convert protocol format of the compressed digital audio data and of the compressed digital video data respectively;
the sending module is configured to send respectively the digital audio data and the digital video data subjected to the protocol format conversion to a network.

Preferably, the coding format of the acquired digital video data is RGB format; accordingly, the coding format conversion module is further configured to convert the coding format of the digital video data from RGB format to YUV format.

Preferably, the compression module includes a first compression submodule and a second compression submodule, in which
the first compression submodule is configured to compress the digital audio data with an MP3 compression algorithm;
the second compression submodule is configured to compress the digital video data in the converted coding format with a JPEG compression algorithm.

Preferably, the protocol format conversion module is also configured to encapsulate according to a transmission protocol of the network the digital audio data and the digital video data into packets corresponding to the transmission protocol of the network.

Preferably, the device also includes a storage module and a reading module, in which
the storage module is configured to store the digital audio data and the digital video data in the converted coding format in a respective dedicated storage;
the reading module is configured to, when the size of the data stored in the storage reaches a preset threshold, read the digital audio data and the digital video data in the converted coding format from the dedicated storage.

With the method and device for transmission of multimedia data according to the embodiments of the present disclosure, analogue multimedia data received from a terminal is converted to digital multimedia data; the digital multimedia data is separated into digital audio data and digital video data, and coding format of the digital video data is converted; the digital audio data and the digital video data in converted coding format are compressed respectively, protocol format of the compressed digital audio data and of the compressed digital video data is converted respectively, and the resulting digital audio data and the resulting digital video data are sent to a network. In this way, both video data and audio data may be transmitted, and the transmission rate of multimedia data may be increased efficiently.

### BRIEF DESCRIPTION OF THE DRAWINGS

Fig. 1 is a first schematic flow chart of a method for transmission of multimedia data according to an embodiment of the present disclosure;
Fig. 2 is a second schematic flow chart of a method for transmission of multimedia data according to an embodiment of the present disclosure; and
Fig. 3 is a schematic structural diagram of a device for transmission of multimedia data according to an embodiment of the present disclosure.

### DETAILED DESCRIPTION

The embodiments of the present disclosure are described in further detail in combination with the drawings, which are merely used for illustration but not to limit the embodiments of the present disclosure, so that the features and technical content of the embodiments of the present disclosure may be understood better.

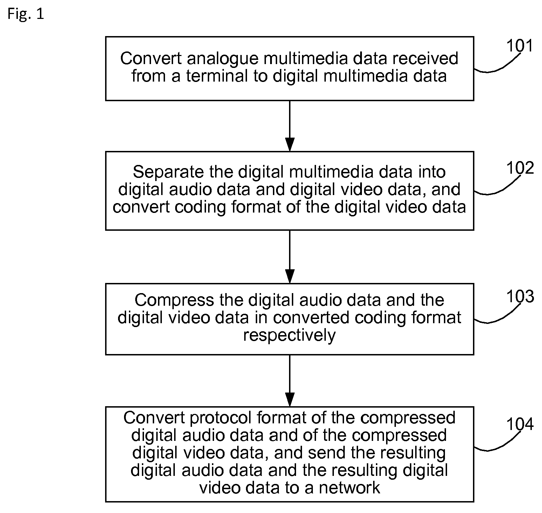

The embodiments of the present disclosure record a method for transmission of multimedia data. As shown in Fig. 1, the method includes steps as follows:
Step 101, analogue multimedia data received from a terminal is converted to digital multimedia data.
   Here, a lead is connected to the motherboard of the terminal, through which analogue multimedia data sent by the terminal is received.
   The analogue multimedia data received from the terminal needs to be converted to corresponding digital multimedia data so as to be transmitted in a network. During the conversion of the analogue multimedia data to the digital multimedia data, it is necessary to perform corresponding Analogue Digital (AD) sampling, during which the analogue multimedia data may be sampled in a required sampling frequency selected on the basis of practice. The sampling frequency represents the accuracy of audio/video signals.
Step 102, the digital multimedia data is separated into digital audio data and digital video data, and coding format of the digital video data is converted.
   Here, the digital multimedia data is separated into digital audio data and digital video data since there is no need to convert format of the digital audio data but there is a need to convert format of the digital video data.
   Here, the coding format of the digital video data is RGB format.
   Accordingly, the step of converting coding format of the digital video data includes: the coding format of the digital video data is converted from RGB format to YUV format.
   Here, the conversion of the coding format of the digital video data from RGB format to YUV format may reduce bit width of the data and reduce the volume of data to be processed.
Step 103, the digital audio data and the digital video data in converted coding format are compressed respectively.
   The step of compressing the digital audio data and the converted digital video data in converted coding format respectively includes:
   the digital audio data is compressed with an MP3 compression algorithm;
   the digital video data in the converted coding format is compressed with a JPEG compression algorithm.

   Here, the purpose of the respective compression of the digital audio data and the digital video data in the converted coding format is to reduce the data volume of the digital audio data and the digital video data in converted coding format.
   Before the step of compressing the digital audio data and the converted digital video data in converted coding format respectively, the method also includes:
   the digital audio data and the digital video data in the converted coding format are stored in a dedicated storage; and when the size of the data stored in the storage reaches a preset threshold, the digital audio data and the digital video data in the converted coding format are read from the dedicated storage for compression.

   Here, the preset threshold may be 2 or 3 frames, etc.
   The dedicated storage may be a Double Data Rate 2 (DDR2) memory. Here, data may be read or written with each clock of the DDR2 memory in a rate twice as that of an external bus, and the DDR2 memory is capable of operating in a speed twice as that of an external control bus. Therefore, the DDR2 memory has a high-performance read/write capability.
Step 104, protocol format of the compressed digital audio data and of the compressed digital video data is converted, and the resulting digital audio data and the resulting digital video data are sent to a network.

The step of converting protocol format of the compressed digital audio data and of the compressed digital video data respectively includes:
the compressed digital audio data and the compressed digital video audio are encapsulated according to a transmission protocol of the network into packets corresponding to the transmission protocol of the network.

After protocol format of the compressed digital audio data and the compressed digital video data is converted respectively, the compressed digital audio data and the compressed digital video data may be transmitted in the network in the form of packets.

In comparison to the prior art, the method for transmission of multimedia data according to the embodiments of the present disclosure enables multimedia data of a terminal to be transmitted to a network without a client installed in the terminal. Furthermore, with the method for transmission of multimedia data according to the embodiments of the present disclosure, the transmission rate of multimedia data may reach 24 frames per second and even more, while the transmission rate of multimedia data with the client installed in the terminal is 8 frames per second in general. The method for transmission of multimedia data according to the embodiments of the present disclosure may efficiently increase the transmission rate of multimedia data and significantly reduce the cost, therefore advancing the deploitation of the resource pool in the terminal in a high speed.

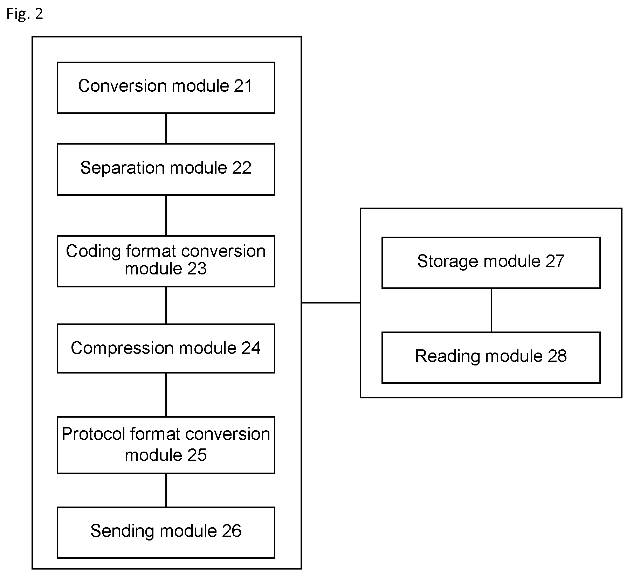

With respect to the method for transmission of multimedia data as described above, the present disclosure further records a device for transmission of multimedia data. As shown in Fig. 2, the device includes: a conversion module 21, a separation module 22, a coding format conversion module 24, a protocol format conversion module 25 and a sending module 26, in which
the conversion module 21 is configured to convert analogue multimedia data received from a terminal to digital multimedia data;
the separation module 22 is configured to separate the digital multimedia data into digital audio data and digital video data;
the coding format conversion module 23 is configured to convert coding format of the digital video data;
the compression module 24 is configured to compress the digital audio data and the digital video data in converted coding format respectively;
the protocol format conversion module 25 is configured to convert protocol format of the compressed digital audio data and of the compressed digital video data respectively;
the sending module 26 is configured to send respectively the digital audio data and the digital video data subjected to the protocol format conversion to a network.

In above technical scheme, the coding format of the digital video data is RGB format.

The coding format conversion module 23 is further configured to convert the coding format of the digital video data from RGB format to YUV format.

The compression module 24 includes a first compression submodule and a second compression submodule,

wherein the first compression submodule is configured to compress the digital audio data with an MP3 compression algorithm;

wherein the second compression submodule is configured to compress the digital video data in the converted coding format with a JPEG compression algorithm.

The protocol format conversion module 25 is further configured to encapsulate according to a transmission protocol of the network the digital audio data and the digital video data into packets corresponding to the transmission protocol of the network.

The device further includes a storage module 27 and a reading module 28, in which
the storage module 27 is configured to store the digital audio data and the digital video data in the converted coding format in a respective dedicated storage;
the reading module 28 is configured to, when the size of the data stored in the storage reaches a preset threshold, read the digital audio data and the digital video data in the converted coding format from the dedicated storage.

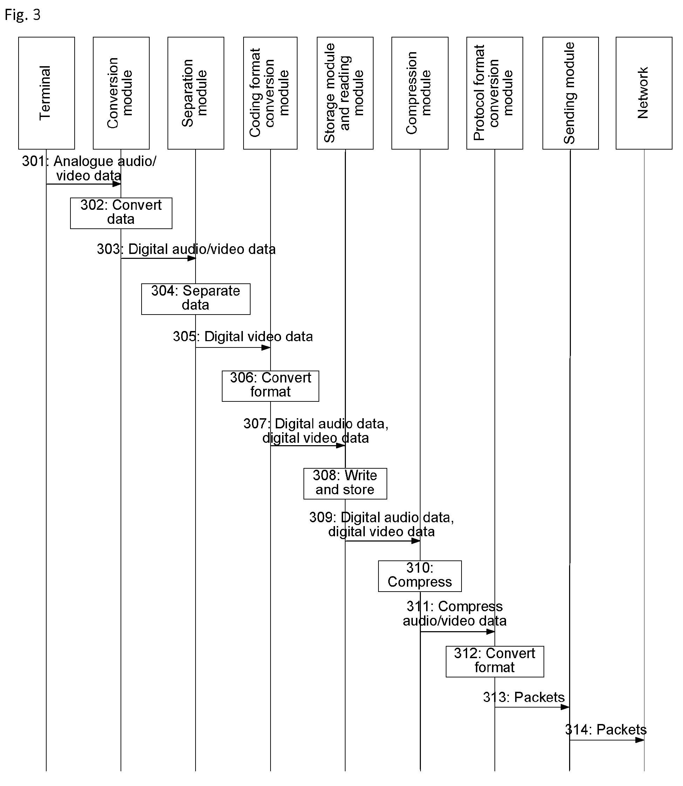

It should be understood by those skilled in the art that the functions implemented with various modules and their submodules in the device for transmission of multimedia data as shown in Fig. 3 may be understood with reference to the description relating to previous method for transmission of multimedia data.

In practical applications, the conversion module 21, the separation module 22, the coding format conversion module 23, the compression module 24, the protocol format conversion module 25 and the sending module 26 of the device for transmission of multimedia data may be implemented with CPU, DSP or FPGA in the device for transmission of multimedia data. The storage module 27 and the reading module 28 of the device for transmission of multimedia data may be implemented with a DDR2 memory in the device for transmission of multimedia data.

In combination of above method for transmission of multimedia data and various modules of above device for transmission of multimedia data, the embodiments of the present disclosure further records a method for transmission of multimedia data. As shown in Fig. 3, the method includes steps as follows:
Step 301, a terminal sends analogue multimedia data to a conversion module.
Steps 302 and 303, the conversion module converts the analogue multimedia data to digital multimedia data and sends the digital multimedia data to a separation module.
Steps 304 and 305, the separation module separates the digital multimedia data into digital audio data and digital video data, and sends the digital video data to a coding format conversion module.
Steps 306 and 307, the coding format conversion module convert coding format of the digital video data. The digital audio data and the digital video data in converted coding format are sent to a storage module.
Steps 308 and 309, the storage module writes and stores the digital audio data and the digital video data in converted coding format in a dedicated storage; when the size of the data stored in the dedicated storage reaches a preset threshold, a reading module reads the digital audio data and the digital video data in converted coding format from the dedicated storage and sends the digital audio data and the digital video data in converted coding format to a compression module.
Steps 310 and 311, the compression module compresses the digital audio data and the digital video data in converted format respectively, sends the compressed digital audio data and the compressed digital video data to a protocol format conversion module.
Steps 312 and 313, the protocol format conversion module converts protocol format of the compressed digital audio data and the compressed digital video data respectively, and sends the compressed digital audio data and the compressed digital video data to a sending module.
Step 314, the sending module sends packets in converted protocol format to a network.

It should be understood by those skilled in the art that above conversion module, separation module, coding format conversion module, storage module, reading module, compression module, protocol format conversion module and sending module may be understood by reference to description relating to various modules in previous device for transmission of multimedia data.

The above descriptions are merely the preferred embodiments of the present disclosure, but not to limit the scope of protection of the present disclosure.

## Claims

1. A method for transmission of multimedia data, comprising steps of:
converting analogue multimedia data received from a terminal to digital multimedia data;
separating the digital multimedia data into digital audio data and digital video data, and converting coding format of the digital video data;
compressing the digital audio data and the digital video data in converted coding format respectively, converting protocol format of the compressed digital audio data and of the compressed digital video data respectively, and sending the resulting digital audio data and the resulting digital video data to a network.

2. The method according to claim 1, wherein the coding format of the digital video data is RGB format;
accordingly, the step of converting coding format of the digital video data comprises: converting the coding format of the digital video data from RGB format to YUV format.

3. The method according to claim 2, wherein the step of compressing the digital audio data and the digital video data in converted coding format respectively comprises:
compressing the digital audio data with an MP3 compression algorithm;
compressing the digital video data in the converted coding format with a JPEG compression algorithm.

4. The method according to claim 3, wherein the step of converting protocol format of the compressed digital audio data and of the compressed digital video data respectively comprises:
encapsulating according to a transmission protocol of the network the compressed digital audio data and the compressed digital video audio into packets corresponding to the transmission protocol of the network.

5. The method according to any one of claims 1 to 4, further comprising: before the step of compressing the digital audio data and the digital video data in converted coding format respectively,
storing respectively the digital audio data and the digital video data in the converted coding format in a dedicated storage; and when the size of the data stored in the storage reaches a preset threshold, reading the digital audio data and the digital video data in converted code format from the dedicated storage for compression.

6. A device for transmission of multimedia data, comprising: a conversion module, a separation module, a coding format conversion module, a compression module, a protocol format conversion module and a sending module,
wherein the conversion module is configured to convert analogue multimedia data received from a terminal to digital multimedia data;
wherein the separation module is configured to separate the digital multimedia data into digital audio data and digital video data;
wherein the coding format conversion module is configured to convert coding format of the digital video data;
wherein the compression module is configured to compress the digital audio data and the digital video data in converted coding format respectively;
wherein the protocol format conversion module is configured to convert protocol format of the compressed digital audio data and of the compressed digital video data respectively;
wherein the sending module is configured to send respectively the digital audio data and the digital video data subjected to the protocol format conversion to a network.

7. The device for transmission of multimedia data according to claim 6, wherein the coding format of the digital video data is RGB format;
accordingly, the coding format conversion module is further configured to convert the coding format of the digital video data from RGB format to YUV format.

8. The device for transmission of multimedia data according to claim 7, wherein the compression module comprises a first compression submodule and a second compression submodule,
wherein the first compression submodule is configured to compress the digital audio data with an MP3 compression algorithm;
wherein the second compression submodule is configured to compress the digital video data in the converted coding format with a JPEG compression algorithm.

9. The device for transmission of multimedia data according to claim 8, wherein the protocol format conversion module is further configured to encapsulate according to a transmission protocol of the network the digital audio data and the digital video data into packets corresponding to the transmission protocol of the network.

10. The device for transmission of multimedia data according to any one of claims 6 to 9, wherein the device further comprises a storage module and a reading module,
wherein the storage module is configured to store respectively the digital audio data and the digital video data in the converted coding format in a dedicated storage;
wherein the reading module is configured to, when the size of the data stored in the storage reaches a preset threshold, read the digital audio data and the digital video data in the converted coding format from the dedicated storage.
